# FASCICULE DE BREVET EUROPEEN

(11) **EP 0 608 246 B1**
(45) Date de publication et mention de la délivrance du brevet: **15.11.1995**
(21) Numéro de dépôt: 92918128.7
(22) Date de dépôt: 02.09.1992
(51) Int. Cl.: F16B 39/10

(54) **ECROU A VERROUILLAGE POSITIF AUTOMATIQUE ET DISPOSITIF ASSOCIE POUR LE VERROUILLAGE ET LE DEVERROUILLAGE DE L'ECROU SUR UN ARBRE**
AUTOMATISCHE POSITIV SELBSTHEMMENDE MUTTER UND VORRICHTUNG ZUR SPANNUNG UND LÖSUNG DER MUTTER AUF DEM BOLZEN
AUTOMATIC POSITIVE LOCKING NUT AND RELATED DEVICE FOR LOCKING AND UNLOCKING THE NUT ON A SHAFT

(30) Priorité: 03.09.1991 BE 9100821
(43) Date de publication de la demande: 03.08.1994
(73) Titulaire: EUROPEAN LOCKING DEVICES S.A., B-4960 Malmedy (BE)
(72) Inventeur: DESSOUROUX, Alexis, B-4800 Verviers (BE)
(74) Mandataire: Van Malderen, Michel
(86) Numéro de dépôt international: BE9200037
(87) Numéro de publication internationale: WO9305307

(56) Documents cités:
- EP-A- 0 102 898
- FR-A- 2 321 625
- FR-A- 2 358 580
- GB-A- 547 624
- US-A- 4 328 720

## Description

### Objet de l'invention

La présente invention se rapporte à un écrou à verrouillage positif automatique qui s'adapte sur un arbre et au dispositif associé qui permet le verrouillage et le déverrouillage dudit écrou sur l'arbre.

### Etat de l'art

On connaît déjà de nombreux types d'écrous à verrouillage positif dont l'exemple le plus classique est l'écrou crénelé associé à une goupille disposée à travers un trou de l'arbre sur lequel est vissé l'écrou et s'étendant à la fois dans ce trou et dans deux créneaux de l'écrou.

Ce type particulier d'écrou présente des inconvénients inhérents à sa structure, en particulier une résistance insuffisante, un mauvais comportement aux vibrations et une efficacité limitée.

Un perfectionnement a été apporté en introduisant un élément frein dans l'écrou à verrouillage positif. Ce type d'écrou est décrit en particulier dans les documents FR-A-2 358 580 et US-A-4 328 720.

Le document EP-0 102 898 décrit un exemple particulier de dispositif d'écrou à verrouillage positif automatique destiné à être immobilisé en rotation sur l'arbre et comportant un élément frein.

Dans ce document, l'élément frein se présente sous la forme d'une bague filetée prisonnière dans un chambrage de l'écrou avec lequel elle est solidaire en rotation. La bague comporte des cannelures le long du filetage intérieur qui sont destinées à coopérer avec les cannelures complémentaires de l'arbre lorsque les filetages de la bague et de l'écrou sont en phase.

Néanmoins, l'efficacité d'un tel écrou risque d'être compromise sous l'effet des vibrations.

Le document FR-A-2 321 625 mentionne quant à lui un dispositif de freinage d'écrou composé principalement d'une bague comportant des cannelures internes et d'un anneau torique ouvert logé dans une gorge circulaire située sur la partie externe de cette dite bague. On notera d'une part que cette bague est monobloc, et, d'autre part que cet anneau joue dans ce cas le rôle d'un circlips de retenue dans ledit écrou à freiner.

Le document GB-A-547 624 mentionne la possibilité d'un freinage obtenu par la pression des filets de l'écrou sur ceux de l'arbre, pression obtenue par un anneau ressort, torique et ouvert comprimant radialement une jupe arrière et solidaire de l'écrou rendue partiellemnt malléable par des fraisures radiales. On notera également que la segmentation artificielle obtenue par des fraisures dans l'écrou fait intégralement partie de cet écrou. D'autre part, le freinage obtenu est un freinage limité et uniquement basé sur les capacités de friction du filetage de l'écrou par rapport au filetage de la vis.

### Buts de l'invention

La présente invention vise à fournir un écrou perfectionné qui puisse se verrouiller de manière sûre et efficace sur un arbre, ne présentant pas les inconvénients des écrous de l'art antérieur, le verrouillage étant du type positif automatique.

En particulier, la présente invention vise à fournir un écrou perfectionné destiné à des applications présentant des niveaux de vibrations élevés. L'écrou selon la présente invention aura même tendance à amortir et à réduire les vibrations auxquelles il est soumis.

### Principaux éléments caractéristiques de la présente invention

La présente invention concerne un écrou à verrouillage positif automatique destiné à être vissé sur un arbre présentant un filetage cannelé, ledit écrou comprenant un élément frein présentant des cannelures sur son diamètre intérieur et qui est destiné à immobiliser l'écrou en rotation sur l'arbre, cet élément frein étant enfermé dans un chambrage de l'écrou et étant mobile axialement dans ledit chambrage entre une première position de verrouillage et une seconde position de déverrouillage caractérisé en ce que l'élément frein est constitué par plusieurs segments de bague cannelée, les différents segments étant solidarisés par un anneau circulaire élastique.

Ladite position de verrouillage correspondant à la position pour laquelle les cannelures de chaque segment de l'élément frein coopèrent parfaitement avec les cannelures complémentaires disposées sur le filetage de l'arbre, et ladite position de déverrouillage correspondant à la position où les cannelures de chaque segment de l'élément frein se désolidarisent totalement des cannelures disposées sur le filetage de l'arbre.

La présente invention concerne également un dispositif de verrouillage et de déverrouillage de l'écrou selon la présente invention sur l'arbre caractérisé en ce qu'il comprend une douille creuse délimitant un logement adapté à recevoir l'écrou selon la présente invention.

### Brève description des figures

L'invention sera mieux comprise à l'aide de la description qui suit donnée à titre d'illustration et faite au moyens des planches de figures annexées, dans lesquelles:
- - la figure 1: représente une vue en élévation latérale de l'arbre avec coupe d'un élément à serrer avec l'écrou (non-représenté);
- - la figure 2: représente une section de l'arbre selon la ligne II-II de la figure 1;
- - la figure 3: représente une vue en élévation latérale de l'écrou selon une première forme d'exécution préférée de la présente invention en demi-coupe demi-vue selon la ligne III-III de la figure 4 et dont la moitié supérieure est représentée en coupe;
- - la figure 4: représente une vue en élévation latérale par l'arrière de l'écrou selon une première forme d'exécution;
- - la figure 5: représente une vue en coupe selon la ligne V-V de la figure 3;
- - la figure 6: représente une vue agrandie des zones de jonction entre des segments de l'élément frein avec l'écrou proprement dit selon la figure 5;
- - la figure 7: représente une vue en élévation latérale éclatée de l'écrou selon la première forme d'exécution dont la moitié supérieure est représentée en coupe;
- - la figure 8: représente une vue en élévation latérale par l'avant des segments de l'élément frein selon la vue VIII-VIII de la figure 7;
- - les figures: 9 et 12 représentent une vue en élévation latérale dont la moitié supérieure est représentée en coupe de l'ensemble arbre, pièce à serrer, écrou et dispositif de verrouillage-déverrouillage selon la première forme d'exécution de l'invention respectivement en position déverrouillée et verrouillée;
- - les figures: 10 et 13 représentent une vue en coupe respectivement selon les lignes X-X de la figure 9 et XIII-XIII de la figure 12;
- - les figures: 11 et 14 représentent une vue agrandie des zones de jonction des segments de l'élément frein avec le filetage de l'arbre respectivement dans la position déverrouillée et verrouillée;

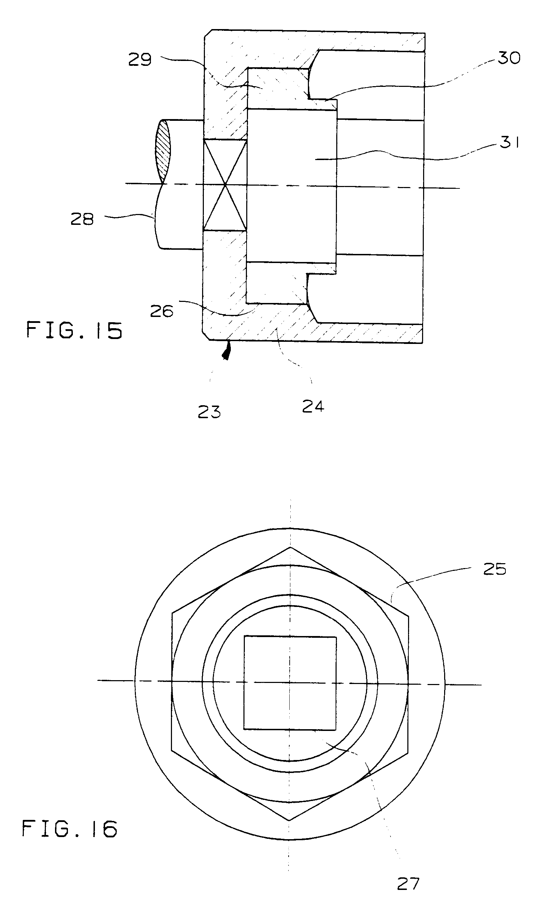

- - la figure 15: représente une vue en coupe du dispositif de verrouillage-déverrouillage selon une première forme d'exécution.
- - la figure 16: représente une vue en élévation latérale par l'arrière du dispositif de verrouillage-déverrouillage de la figure 15 selon une première forme d'exécution;

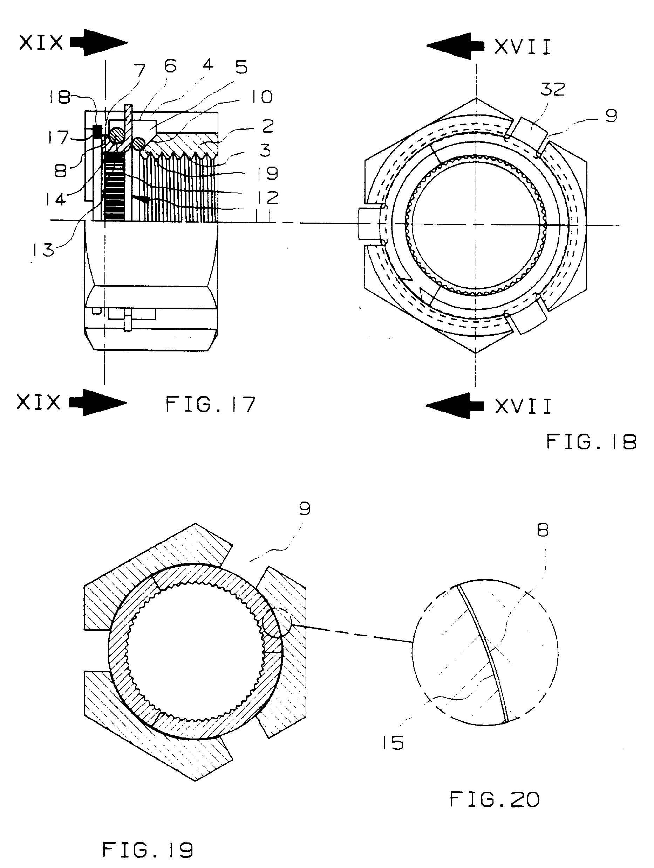

- - la figure 17: représente une vue en élévation latérale de l'écrou selon une seconde forme d'exécution préférée de la présente invention selon la ligne XVII-XVII de la figure 18 et dont la moitié supérieure est représentée en coupe;
- - la figure 18: représente une vue en élévation latérale par l'arrière de l'écrou selon la figure 17;
- - la figure 19: représente une section selon la ligne XIX-XIX de la figure 17;
- - la figure 20: représente une vue agrandie des zones de jonction entre un segment de l'élément frein avec l'écrou proprement dit selon la figure 19;

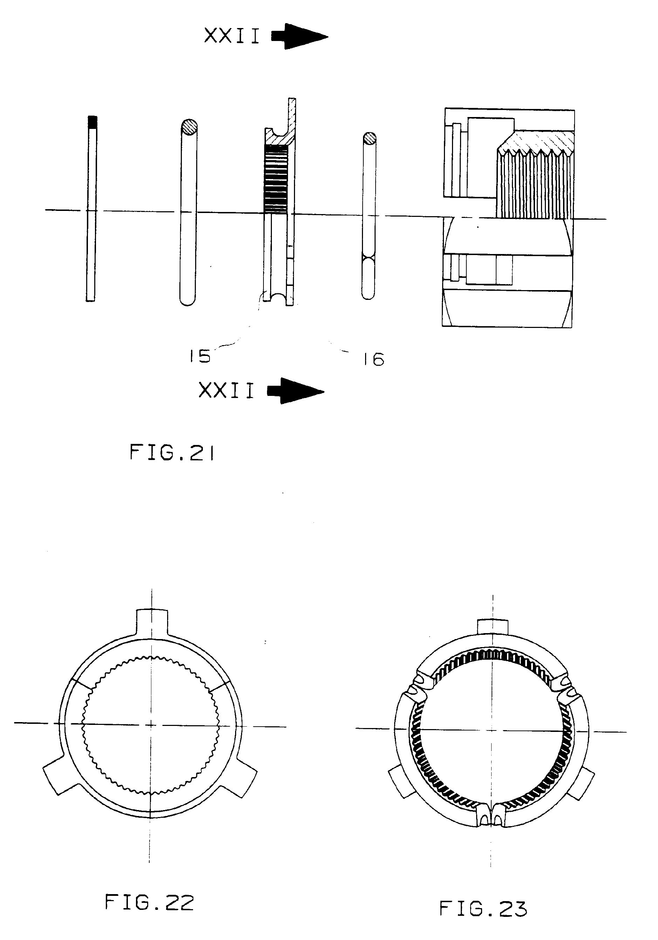

- - la figure 21: représente une vue en élévation latérale éclatée selon la seconde forme d'exécution dont la moitié supérieure est représentée en coupe;
- - la figure 22: représente une vue en élévation latérale par l'avant des segments de l'élément frein selon la vue XXII-XXII de la figure 21;
- - la figure 23: représente les segments de l'élément frein selon la seconde forme d'exécution dans la position de déverrouillage;

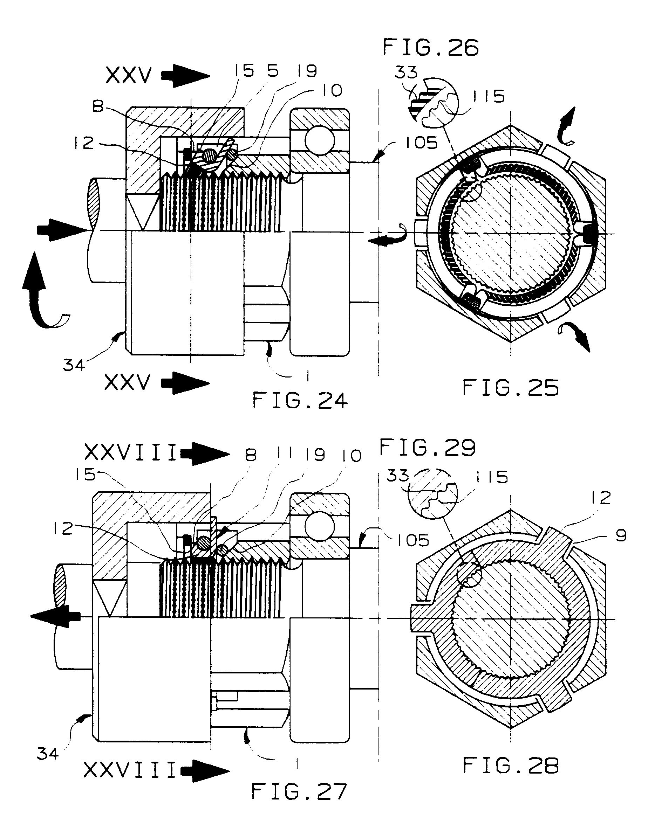

- - les figures 24 et 27: représentent une vue en élévation latérale dont la moitié supérieure est représentée en coupe de l'ensemble arbre, pièce à serrer, écrou et dispositif de verrouillage-déverrouillage selon la seconde forme d'exécution de l'invention respectivement en position déverrouillée et verrouillée;
- - la figure 25: représente une vue en coupe selon la ligne XXV-XXV de la figure 24;
- - la figure 28: représente une section suivant la ligne XXVIII-XXVIII de la figure 27;
- - les figures 26 et 29: représentent une vue agrandie des figures 25 et 28 pour les zones de jonction d'un segment de l'élément frein avec le filetage de l'arbre respectivement dans la position déverrouillée et verrouillée;

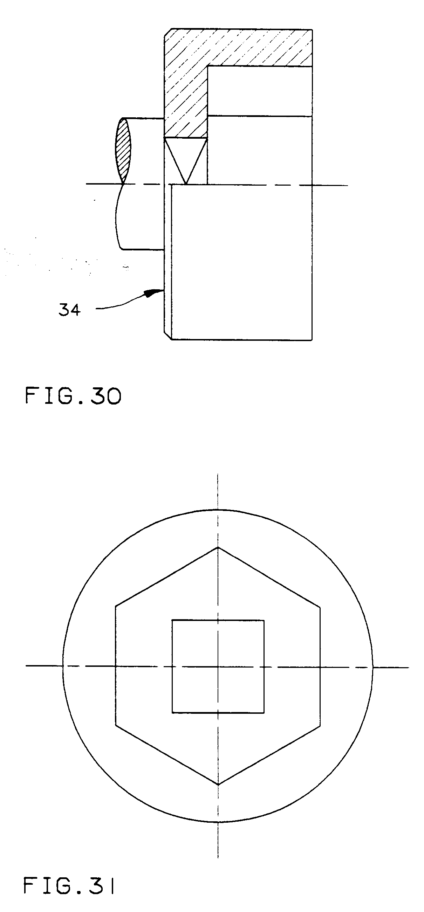

- - la figure 30: représente une vue en élévation dont la moitié supérieure est représentée en coupe du dispositif de verrouillage-déverrouillage pour l'écrou décrit dans la seconde forme d'exécution.
- - la figure 31: représente une vue en élévation latérale par l'arrière du dispositif de verrouillage-déverrouillage pour l'écrou décrit dans la seconde forme d'exécution.

### Description de plusieurs modes d'exécution préférés de la présente invention

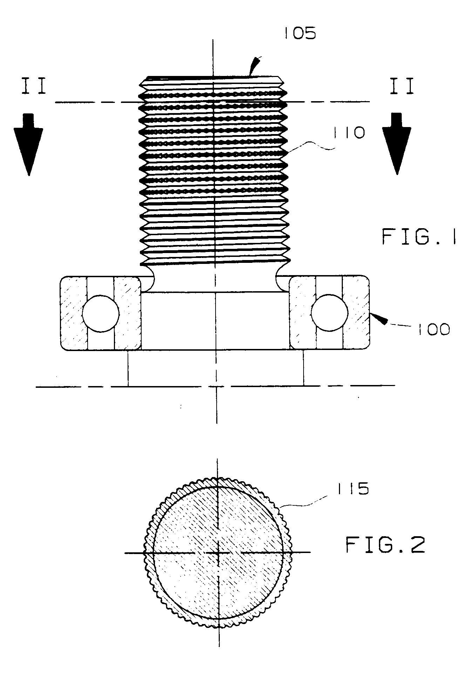

La figure 1 représente une pièce à serrer portant le repère général 100 à l'aide d'un arbre fileté 105 qui s'introduira dans un écrou à verrouillage positif automatique selon la présente invention. Il convient de noter que le filetage 110 de l'arbre 105 présente un profil cannelé 115 particulièrement bien représenté à la figure 2.

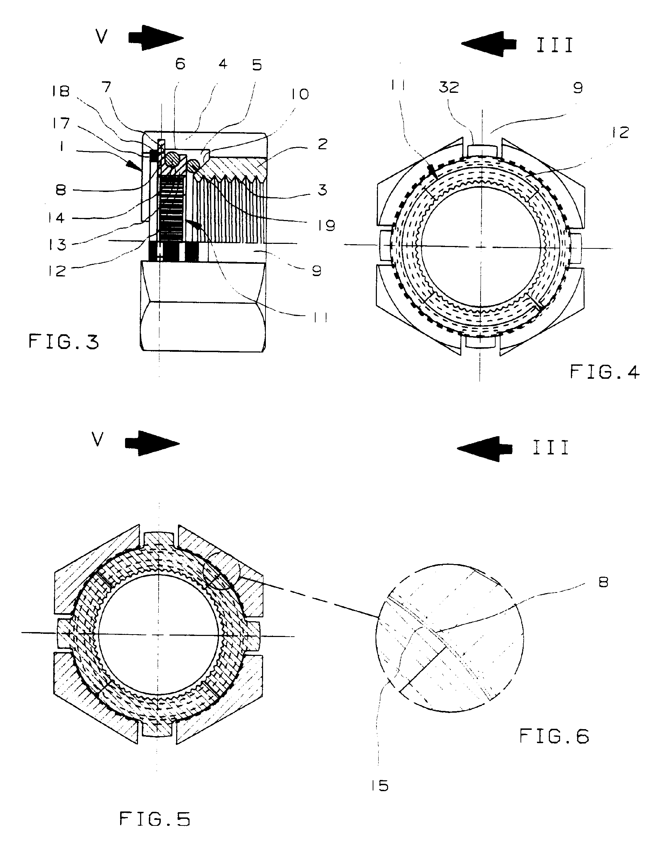

La figure 3 représente l'écrou à verrouillage positif automatique selon une première forme d'exécution de la présente invention. La moitié supérieure de la figure est représentée en coupe, la moitié inférieure est représentée en élévation latérale.

L'écrou à verrouillage positif automatique selon la présente invention est désigné par le repère général 1. Il comprend un écrou proprement dit possédant un corps massif 2 qui présente un alésage central avec un filetage interne 3 et à partir duquel s'étend vers l'arrière une jupe 4 qui délimite un chambrage 5. Le chambrage 5 est une cavité possédant une paroi interne cylindrique 6 qui se termine par un petit rebord 7 s'étendant vers l'intérieur et délimitant un épaulement radial 8.

L'écrou comporte en outre sur sa surface externe quatre rainures 9 obtenues par fraisage et qui sont angulairement équidistantes. Ces rainures sont fraisées dans la totalité de l'épaisseur de la jupe 4 à partir de la jonction avec le corps 2.

La partie arrière du corps massif 2 qui s'étend vers le chambrage 5 présente une forme tronconique créant ainsi dans le chambrage 5 une rampe circulaire 10.

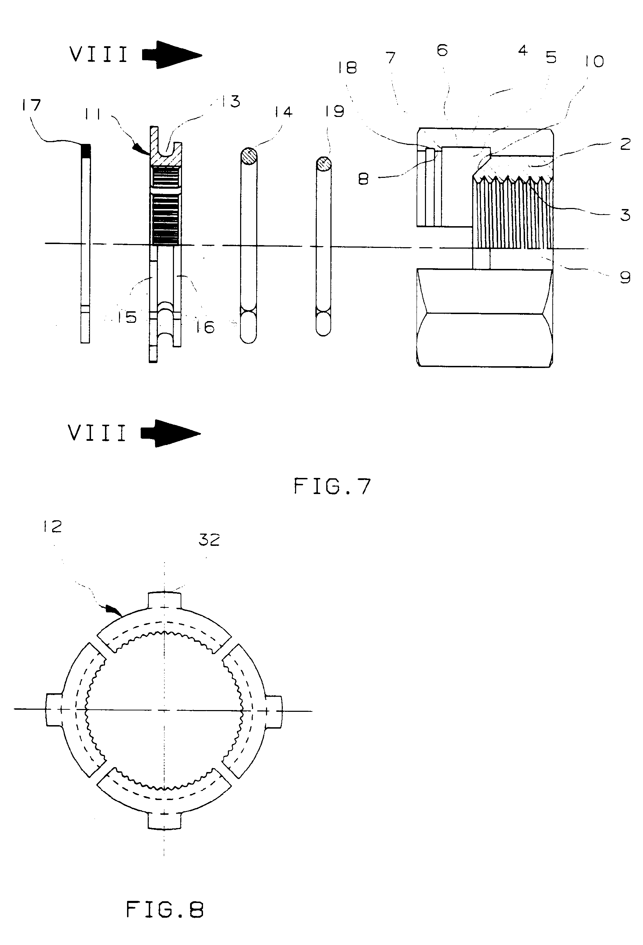

De manière avantageuse, on a disposé dans le chambrage 5 l'élément frein 11 constitué de quatre segments 12 ainsi qu'il apparaît clairement à la figure 8.

Les segments 12 de l'élément frein 11 sont chacun pourvus vers l'extérieur d'une gorge 13 d'un même diamètre et dans laquelle prendra place un anneau circulaire élastique 14 qui permet de solidariser les différents segments 12 de l'élément frein 11 en les maintenant dans un parfait alignement circulaire et fortement pressés les uns contre les autres.

La gorge 13 est délimitée de part et d'autre part par des collerettes radiales 15 et 16 qui empêchent tout jeu axial de l'anneau circulaire élastique 14 ainsi que tout échappement de ce dernier hors de la gorge 13.

Ainsi que représenté à la figure 7, la collerette arrière 15 possède un diamètre supérieur à la collerette 16 et qui correspond au diamètre de l'épaulement radial 8 situé à l'intérieur du chambrage 5. Ceci permet d'éviter tout déplacement radial des segments 12.

En outre, chaque segment 12 de l'élément frein 11 comporte une patte 32 située dans la partie médiane de l'élément frein. De cette manière, l'élément frein comportera quatre pattes 32 équidistantes angulairement ce qui permet de solidariser l'élément frein 11 à l'écrou 1 en logeant les pattes 32 dans les rainures 9.

L'élément frein 11 est maintenu dans le chambrage 5 à l'aide d'un circlips 17 lui-même logé dans une gorge 18 pratiquée dans la partie arrière de la jupe 4 de l'écrou de manière à faire obstacle à tout mouvement vers l'extérieur de l'élément frein 11 hors du chambrage 5.

Un second anneau circulaire élastique 19 est situé entre la collerette 16 de l'élément frein 11 et la rampe circulaire 10. Cet anneau 19 est précontraint radialement de manière que lorsqu'il est disposé sur la rampe 10 il aura tendance à exercer une force axiale tendant à repousser l'élément frein 11 contre le circlips d'arrêt 17.

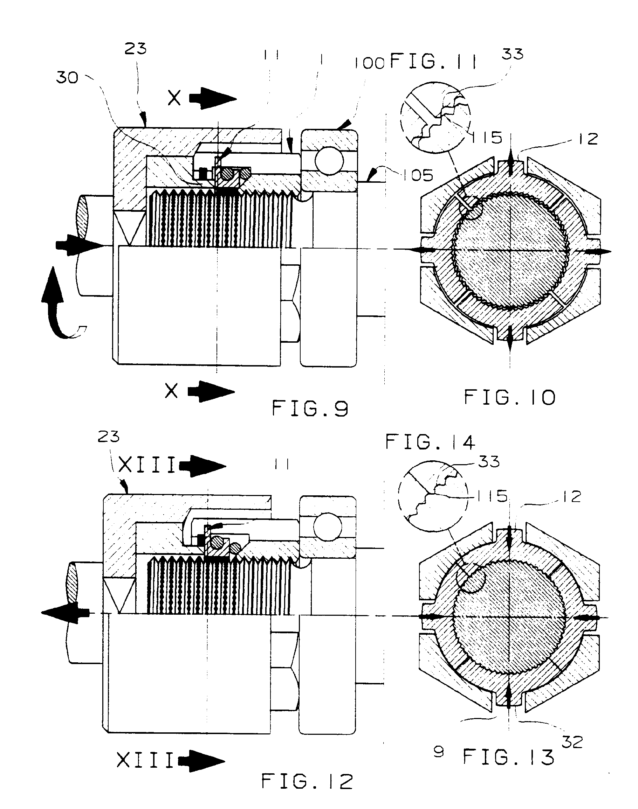

Lorsque l'on exerce une pression axiale sur l'élément frein 11, celui-ci peut se mouvoir dans le chambrage 5 de la position dite de verrouillage représentée à la figure 12 vers la position dite de déverrouillage représentée à la figure 9 et vice-versa.

Le passage de la position dite de verrouillage à la position de déverrouillage se décompose essentiellement en deux phases. La première phase consiste simplement à repousser l'anneau 19 en le forçant à remonter la rampe 10 et la seconde phase consiste lors du contact de l'élément frein 11 avec la rampe 10 à forcer ce dernier à monter la rampe 10. L'élément frein 11 étant constitué de quatre segments 12 maintenus solidairement par un anneau circulaire élastique précontraint 14, les segments 12 ont la possibilité de s'écarter radialement les uns des autres tout en continuant à monter la rampe 10. Il en résulte donc une augmentation du diamètre intérieur de l'élément frein 11 qui permet le désengrènement des cannelures 33 disposées sur la partie interne des différents segments 12 par rapport aux cannelures correspondantes 115 disposées le long du filetage 110 de l'arbre 105.

La rotation de l'écrou 1 destinée à serrer l'élément 100 sur l'arbre 105 et le mouvement de translation de l'élément frein 11 sont effectués à l'aide d'un dispositif de verrouillage et de déverrouillage représenté aux figures 15 et 16.

Ce dispositif de verrouillage-déverrouillage portant le repère général 23 est essentiellement composé d'un corps cylindrique extérieur 24 usiné selon la forme d'un hexagone 25 dans sa partie avant de manière à épouser le contour hexagonal de l'écrou 1. Il se présente de manière cylindrique sur la partie disposée au milieu et il est percé d'un trou carré 27 sur la partie arrière de manière à s'adapter aux outillages courants du commerce 28.

La partie centrale cylindrique 26 est sertie d'une bague 29 comportant une portion amincie 30 destinée à venir s'appuyer sur l'élément frein 11 ainsi qu'un alésage 31 de manière à laisser le libre passage à l'arbre 105.

Le déverrouillage de l'écrou sur l'arbre est parfaitement représenté aux figures 9, 10 et 11.

L'écrou 1 préalablement engagé dans le dispositif de verrouillage 23 est déverrouillé de l'arbre 105 en exerçant une pression et un mouvement de rotation à l'aide du dispositif 23.

Par le fait qu'on imprime un mouvement radial aux segments de frein 12 comme mentionné précédemment et qui est réalisé en exerçant une pression par la partie 30 du dispositif 23 sur l'élément frein 11, on obtient le désengrènement de cannelures 33 présentes dans les segments 12 de l'élément frein 11 avec les cannelures 115 présentes sur le filetage 110 de l'arbre 105.

Le relâchement de la pression sur l'outil 23 permet le mouvement radial inverse des segments 12 de l'élément frein provoquant un engrènement parfait des cannelures 33 présentes à la périphérie interne de l'élément frein 11 avec les cannelures 115 apparaissant sur le filetage 110 de l'arbre 105, ainsi que représenté aux figures 12, 13 et 14.

Selon une seconde forme d'exécution, le désengrènement des cannelures 33 de l'élément frein 11 avec les cannelures 115 de l'arbre 105 qui était obtenu selon une première forme d'exécution par un mouvement radial, peut également être réalisé par un mouvement rotationnel des segments 12 de l'élément frein autour d'un axe géométrique traversant perpendiculairement et en son centre la section droite de l'anneau élastique 14 qui permet la solidarisation des différents segments 12.

Cette seconde forme d'exécution sera mieux comprise à l'aide des figures 17 à 31 où les mêmes éléments dans les deux formes d'exécution portent les mêmes repères numériques.

Selon cette seconde forme d'exécution, il est nécessaire que l'anneau circulaire 14 qui permet la solidarisation des différents segments 12 de l'élément frein 11 soit élastique dans toutes les directions, qu'il soit par exemple constitué d'un élastomère ou d'un ressort.

Ainsi qu'il apparaît clairement aux figures 17 et 18, les trois pattes disposées sur chacun des trois segments 12 de l'élément frein 11, dépassent légèrement les parties planes du profil extérieur hexagonal de l'écrou 1. De cette manière, si l'on exerce sur celles-ci, ainsi que représenté aux figures 27 et 28, une pression axiale par l'intermédiaire d'un dispositif de déverrouillage qui se présente sous la forme d'une douille hexagonale standard du commerce 34, on obtient un mouvement axial de l'élément frein 11 présentant une résultante horizontale de force axiale de sens contraire et qui est provoquée par l'effort lors de la montée de l'anneau élastique 19 sur la rampe conique interne 10 de l'écrou 1.

En imprimant une pression axiale à l'élément frein 11, on observe que la collerette radiale 15 délimitant la gorge contenant l'anneau circulaire 19, n'est plus en contact avec la surface cylindrique interne 8 du chambrage 5 de l'écrou 1, ainsi que représenté aux figures 19 et 20.

Dans ce cas, les trois segments 12 de l'élément frein 11 tels que représentés aux figures 24 et 25 peuvent basculer en un mouvement rotationnel, dû au fait de la parfaite élasticité dans toutes les directions de l'anneau circulaire élastique 14.

Ceci provoque le désengrènement des cannelures 115 de l'arbre 105 avec les cannelures 33 présentes sur la surface interne des différents segments 12 de l'élément frein 11, ce qui permet le mouvement rotationnel de l'écrou sur l'arbre 105.

Par contre, un relâchement de la pression exercée sur l'outil 34 ainsi que représenté aux figures 27 et 28, provoque le phénomène cinématique inverse de celui mentionné précédemment et permet l'engrènement des cannelures 115 de l'arbre 105 avec les cannelures 33 des segments 12 de l'élément frein 11 de manière à verrouiller l'écrou 1 sur l'arbre 105; ceci à l'aide des pattes 32 qui sont disposées dans les rainures 9 de l'écrou 1.

Il convient de noter que l'outil 34 décrit aux figures 30 et 31 et qui est utilisé pour le verrouillage et le déverrouillage de l'écrou 1 selon la seconde forme d'exécution est une douille tout à fait standard à hexagone interne.

## Revendications

1. Ecrou (1) à verrouillage positif automatique destiné à être vissé sur un arbre (105) présentant un filetage cannelé (115), ledit écrou comprenant un élément frein (11) présentant des cannelures (33) sur le diamètre interne, et qui est destiné à immobiliser l'écrou en rotation sur l'arbre, cet élément frein (11) étant enfermé dans un chambrage (5) de l'écrou et étant mobile axialement dans ledit chambrage entre une première position de verrouillage et une seconde position de déverrouillage, caractérisé en ce que l'élément frein (11) est constitué de plusieurs segments (12) de bague cannelée, les différents segments étant solidarisés par un anneau circulaire élastique (14).

2. Ecrou selon la revendication 1 caractérisé en ce qu'il présente sur sa surface externe quatre rainures (9) longitudinales et qui sont angulairement équidistantes et dans lesquelles se logeront des pattes (32) présentes sur la partie médiane et extérieure de chaque segment (12) de l'élément frein (11) de manière à solidariser l'élément frein (11) à l'écrou (1).

3. Ecrou selon l'une quelconque des revendications précédentes caractérisé en ce que les segments (12) de l'élément frein (11) sont chacun pourvus vers l'extérieur d'une gorge (13) d'un même diamètre et dans laquelle prendra place l'anneau circulaire élastique (14) qui permet de solidariser les différents segments (12) de l'élément frein (11) en les maintenant dans un parfait alignement circulaire et fortement pressés les uns contre les autres.

4. Ecrou selon la revendication 3 caractérisé en ce que la gorge (13) de l'élément frein (11) est délimitée de part et d'autre par deux collerettes radiales (15 et 16) qui empêchent tout jeu axial de l'anneau circulaire élastique (14).

5. Ecrou selon l'une quelconque des revendications précédentes caractérisé en ce que le chambrage (5) est une cavité possédant une paroi interne cylindrique (6) qui se termine par un petit rebord s'étendant vers l'intérieur et délimitant un épaulement radial (8).

6. Ecrou selon l'une quelconque des revendications précédentes caractérisé en ce que le chambrage (5) de l'écrou (1) présente une partie tronconique (10) qui sert de rampe circulaire et qui est située dans la partie arrière du chambrage (5).

7. Ecrou selon l'une quelconque des revendications précédentes caractérisé en ce qu'il comporte un second anneau circulaire (19) précontraint radialement présent dans le chambrage (5) et situé entre la collerette intérieure (16) de l'élément frein (11) et la partie tronconique (10) dans le chambrage (5).

8. Ecrou selon l'une quelconque des revendications précédentes caractérisé en ce que la collerette extérieure (15) possède un diamètre supérieur à la collerette intérieure (16) et qui correspond au diamètre de l'épaulement radial (8) situé à l'intérieur du chambrage (5).

9. Ecrou selon l'une quelconque des revendications précédentes caractérisé en ce que l'élément frein (11) est maintenu dans le chambrage (5) à l'aide d'un circlips (17) lui-même logé dans une gorge (18) pratiquée dans la partie arrière de la jupe (4) de l'écrou de manière à faire obstacle à tout mouvement vers l'extérieur de l'élément frein (11) hors du chambrage (5).

10. Ecrou selon l'une quelconque des revendications 1 à 7 caractérisé en ce que les pattes (32) disposées sur chacun des segments (12) de l'élément frein (11), dépassent légèrement les parties planes du profil extérieur hexagonal de l'écrou (1).

11. Dispositif associé pour le verrouillage et le déverrouillage de l'écrou (1) sur un arbre (105) comprenant une douille creuse (23) délimitant un logement adapté pour recevoir l'écrou (1) selon l'une quelconque des revendications précédentes caractérisé en ce que la partie centrale cylindrique (26) de la douille (23) est sertie d'une bague (29) comportant une portion amincie (30) destinée à venir s'appuyer sur l'élément frein (11) ainsi qu'un alésage de manière à laisser le libre passage à l'arbre (105).

## Patentansprüche

1. Mutter (1) mit automatischer, zwangsläufiger Verriegelung, die dazu bestimmt ist, auf eine Welle (105) aufgeschraubt zu werden, die ein gerieftes Gewinde (115) aufweist, wobei die Mutter ein Bremselement (11) umfaßt, das auf dem inneren Durchmesser Riefen (33) aufweist, und das dazu bestimmt ist, die Mutter auf der Welle gegen Drehung zu blockieren, wobei dieses Bremselement (11) in eine Aussparung (5) der Mutter eingeschlossen ist, und in dieser Aussparung zwischen einer ersten Verriegelungsposition und einer zweiten Entriegelungsposition axial beweglich ist, dadurch gekennzeichnet, daß das Bremselement (11) aus mehreren Segmenten (12) eines gerieften Rings besteht, wobei die verschiedenen Segmente durch einen elastischen, kreisförmigen Ring (14) miteinander verbunden sind.

2. Mutter gemäß Anspruch 1, dadurch gekennzeichnet, daß sie in ihrer äußeren Oberfläche vier Längsnuten (9) aufweist, die den gleichen Winkelabstand voneinander haben, und in die Ansätze (32) eingeschoben werden, die auf dem mittleren und äußeren Teil jedes Segments (12) des Bremselements (11) vorhanden sind, so daß das Bremselement (11) mit der Mutter (1) verbunden wird.

3. Mutter gemäß irgendeinem der vorhergehenden Ansprüche, dadurch gekennzeichnet, daß jedes der Segmente (12) des Bremselements (11) nach außen mit einer Hohlkehle (13) von gleichem Durchmesser versehen ist, in die der elastische, kreisförmige Ring (14) eingesetzt wird, der ermöglicht, die verschiedenen Segmente (12) des Bremselements (11) miteinander zu verbinden, wobei sie in einer kreisförmigen, vollkommenen Ausrichtung gehalten werden und fest gegeneinander gepreßt werden.

4. Mutter gemäß Anspruch 3, dadurch gekennzeichnet, daß die Hohlkehle (13) des Bremselements (11) auf beiden Seiten durch zwei radiale Kragen (15 und 16) begrenzt ist, die jegliches axiales Spiel des elastischen, kreisförmigen Rings (14) verhindern.

5. Mutter gemäß irgendeinem der vorhergehenden Ansprüche, dadurch gekennzeichnet, daß die Aussparung (5) ein Hohlraum ist, der eine zylindrische, innere Wand (6) besitzt, die mit einem kleinen Rand endet, der sich nach innen erstreckt und eine radiale Schulter (8) begrenzt.

6. Mutter gemäß irgendeinem der vorhergehenden Ansprüche, dadurch gekennzeichnet, daß die Aussparung (5) der Mutter (1) einen kegelstumpfförmigen Teil (10) aufweist, der als kreisförmige Rampe dient, und der in dem hinteren Teil der Aussparung (5) gelegen ist.

7. Mutter gemäß irgendeinem der vorhergehenden Ansprüche, dadurch gekennzeichnet, daß sie einen radial vorgespannten, zweiten kreisförmigen Ring (19) umfaßt, der in der Aussparung (5) angeordnet ist und zwischen dem inneren Kragen (16) des Bremselements (11) und dem kegelstumpfförmigen Teil (10) in der Aussparung (5) gelegen ist.

8. Mutter gemäß irgendeinem der vorhergehenden Ansprüche, dadurch gekennzeichnet, daß der äußere Kragen (15) einen Durchmesser besitzt, der größer als der innere Kragen (16) ist, und der dem Durchmesser der innerhalb der Aussparung (5) gelegenen, radialen Schulter (8) entspricht.

9. Mutter gemäß irgendeinem der vorhergehenden Ansprüche, dadurch gekennzeichnet, daß das Bremselement (11) in der Aussparung (5) mit Hilfe eines Sicherungsrings (17) festgehalten wird, der selbst in einer in dem hinteren Teil des Mantels (4) der Mutter angebrachten Hohlkehle (18) untergebracht ist, so daß jede Bewegung des Bremselements (11) nach außen aus der Aussparung (5) heraus verhindert wird.

10. Mutter gemäß irgendeinem der Ansprüche 1 bis 7, dadurch gekennzeichnet, daß die auf jedem der Segmente (12) des Bremselements (11) angeordneten Ansätze (32) über die ebenen Teile des hexagonalen, äußeren Profils der Mutter (1) ein wenig überstehen.

11. Zugeordnete Vorrichtung zur Verriegelung und Entriegelung der Mutter (1) auf einer Welle (105), die eine hohle Hülse (23) umfaßt, die einen Sitz begrenzt, der ausgelegt ist, um die Mutter (1) gemäß irgendeinem der vorhergehenden Ansprüche aufzunehmen, dadurch gekennzeichnet, daß in den zylindrischen, zentralen Teil (26) der Hülse (23) ein Ring (29) eingesetzt ist, der einen dünner gemachten Bereich (30) aufweist, der dazu bestimmt ist, auf dem Bremselement (11) aufzuliegen, sowie eine Bohrung aufweist, so daß ein freier Durchgang für die Welle (105) gelassen wird.

## Claims

1. Automatic positive locking nut (1) intended to be screwed on a shaft (105) having a serrated thread (115), the said nut comprising a locking element (11) with serrations (33) on its internal diameter intended to fix the nut in rotation on the shaft, this locking element (11) being confined in a counterbore (5) of the nut and being axially movable in the said counterbore between a first locking position and a second unlocking position, characterized in that the locking element (11) comprises several segments (12) of serrated ring, the different segments being embodied by an resilient circular ring (14).

2. Nut according to the claim 1 characterized in that it has on its external surface four longitudinal slots (9) which are angularly equidistant and wherein will lodge tangs (32) located on the median and external part of each segment (12) of the locking element (11) in a way to embody the locking element (11) with the nut (1).

3. Nut according to any one of previous claims characterized in that the segments (12) of the locking element (11) are each one provided on their external part with a groove (13) of equal diameter and wherein will be fitted the resilient circular ring (14) allowing to embody the different segments (12) of the locking element (11) maintaining them in a perfect circular alignment and strongly pressed the ones against the others.

4. Nut according to the claim 3 characterized in that the groove (13) of the locking element (11) is delimited through and through by two radial collars (15) and (16) which prevent any axial gap of the resilient circular ring (14).

5. Nut according to any one of previous claims characterized in that the counterbore (5) is a cavity with a cylindrical internal wall (6) that ends in a small edge extending to the interior and delimiting a radial shouldering (8).

6. Nut according to any one of previous claims characterized in that the counterbore (5) of the nut (1) has a part in the shape of a truncated cone (10) which is used as a circular ramp and which is located in the rear part of the counterbore (5).

7. Nut according to any one of previous claims characterized in that it has a second circular ring (19) radially preloaded in the counterbore (5) and located between the internal collar (16) of the locking element (11) and the part in the shape of a truncated cone (10) in the counterbore (5).

8. Nut according to any one of previous claims characterized in that the external collar (15) has a higher diameter than the diameter of the collar (16) and which corresponds to the diameter of the radial shouldering (8) located in the counterbore (5).

9. Nut according to any one of previous claims characterized in that the locking element (11) is maintained into the counterbore (5) by a circular clip (17) itself lodged in a groove (18) machined in the rear part of the skirt (4) of the nut in order to hinder any displacement to the outside of the locking element (11) out of the counterbore (5).

10. Nut according to any one claims from 1 to 7 characterized in that the tangs (32) of each segment (12) of the locking element (11) slightly over-top the flat parts of the hexagonal external profile of the nut (1).

11. Related device for the locking and the unlocking of the nut (1) on a shaft (105) including a hollow socket (23) building an adapted housing to receive the nut (1) according to any one of previous claims characterized in that the cylindrical central part (26) of the hollow socket (23) is crimped with a ring (29) having a thinner portion (30) intended to lean on the locking element (11) as well as a boring in order to leave a free entrance space for the shaft (105).
